# EUROPEAN PATENT APPLICATION

(11) **EP 2 661 142 A1**
(43) Date of publication of application: **06.11.2013**
(21) Application number: 12290149.9
(22) Date of filing: 03.05.2012
(51) Int. Cl.: H04W 76/00, H04W 84/04

(54) **A portable femtocell base station, a user terminal, and a method of detection of a user terminal as being in a femtocell**

(71) Applicant: Alcatel Lucent, 75007 Paris (FR)
(72) Inventor: Brend, Graham R., Bathford Bath, BA1 7UE (GB); Kirkman, Stephen A., Monkton Park Chippenham, SN15 3XQ (GB)
(74) Representative: Sarup, David Alexander

(57) **Abstract**

A method is provided of detection of a user terminal for cellular wireless telecommunications as being in a femtocell by: sending a paging message from a portable femtocell base station, the paging message including an indicator that any user terminal receiving the paging message is to respond; the user terminal responding by sending a response message including an identifier of the user terminal; and the response message being detected by the portable femtocell base station.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells than a macrocell. Cells that arc smaller than macrocells are sometimes referred to as small cells, microcells, picocells, or femtocells, but we use the term femtocells generically for cells that are smaller than macrocells.

A femtocell base station is of a relatively low transmit power and hence each femtocell is of a small coverage area compared to a macrocell. A typical coverage range is tens of metres. Femtocell base stations have auto-configuring properties so as to support plug-and-play deployment by users.

One known type of Femtocell base station uses a broadband Internet Protocol connection as "backhaul", namely for connecting to the telecommunications core network. The broadband backhaul may be a wireless backhaul.

Femtocell base stations are sometimes referred to as femtos.

Using portable femtos to provide a wireless network in disaster area is known. Since femtocells are small, mobile, user-deployable base stations, they may be used in scenarios where establishing a mobile network quickly is important. For example, in natural disaster areas, they are used to provide wireless network coverage, for example where traditional base stations have been damaged or destroyed by the disaster. Deployment of femtos or other small cell base stations to support wireless networks under such scenarios is well-known, as explained in the paper by D.Abusch-Magder, P.Bosch, T.Klein, P.Polakos, L.Samuel, H.Viswanathan, entitled "911-NOW: A Network on Wheels for Emergency Response and Disaster", Bell Labs Technical Journal 11(4), 113-133 (2007), and http://www.militarvaerospace.com/articles/print/volume-18/issue-8/news/news/lgs-and-pacstar-provide-tactical-base-station-router-to-us-army-reserve-command.html .These solutions are focussed on quickly providing wireless coverage for user terminals within a disaster area, hence supporting the ability of said user terminals to make and receive phone calls.

As further background, it is noted that user terminals typically respond to paging messages by providing an identifier of themselves that is temporary rather than permanent in order to reduce the risk of security issues arising such as unauthorised eavesdropping on the wireless link.

### Summary

The reader is referred to the appended independent claims. Some preferred features are laid out in the dependent claims.

An example of the present invention is a method of detection of a user terminal for cellular wireless telecommunications as being in a femtocell by: sending a paging message from a portable femtocell base station, the paging message including an indicator that any user terminal receiving the paging message is to respond; the user terminal responding by sending a response message including an identifier of the user terminal; and the response message being detected by the portable femtocell base station.

Preferably, the user terminal also responds by emitting sound at maximum volume according to a given sound tone pattern so as to aid in locating the user equipment. Preferably, the identifier of the user terminal is a globally unique permanent identifier and is used to determine personal data for use in identifying the user. Preferably, the personal data includes at least one of name and address. Preferably, the identifier is International Mobile Subscriber Identity, IMSI.

Some preferred embodiments make use of a portable femtocell base station to assist in the detection of a victim of a disaster where the presence of the victim is not obvious. As femtocell coverage areas are small, the detection of a user terminal usefully aids locating the victim by limiting the search area for the victim to a small area, namely the particular femtocell in which the user terminal was detected.

In some embodiments, the user terminal is commanded to make a loud sound according to a given pattern triggered by reception of the paging message. This aids rescuers in finding the victim.

In some embodiments, the user terminal is triggered to provide its identifier in response to reception of the paging message and the identifier is used to identify the victim. This information may be provided to rescuers, for example by display at or near the portable fcmtocell base station, to aid them in their activities.

Preferred embodiments involve femtocell base stations to detect, locate, and identify user terminals within specific areas. Preferred embodiments provide a quick and efficient method to assist in disaster recovery, by locating and identifying trapped victims.

The present invention also relates to a portable femtocell base station and also relates to a user terminal.

### Brief Description of the Drawings

Embodiments of the present invention will now be described by way of example and with reference to the drawings, in which:
Figure 1 is a diagram illustrating a disaster-recovery system in which portable femtos are deployed to detect, locate and identify a victim via his/her user terminal,
Figure 2 is a diagram illustrating the structure of a portable femto shown in Figure 1 in more detail,
Figure 3 is a message sequence diagram illustrating operation of the system in victim detection, location, and identification, and
Figure 4 is a flow diagram illustrating operation of the victim's user equipment.

### Detailed Description

The inventors realised that whilst quickly re-establishing a wireless network may be an aspect of disaster relief, there is another aspect, namely locating and identifying victims of a disaster when they are not visible or their presence is not obvious. Femtocell base stations provide limited wireless coverage and this feature can be utilised in scenarios where the limited coverage is beneficial in locating a victim. Various types of natural disasters, for example, earthquakes, avalanches, landslides etc, have common issues, in that rescuers need to quickly locate victims who might be buried within collapsed buildings, under snow or earth etc.

The inventors also realised that, in addition, once a victim has been located, it can be difficult to identify that victim, if, for example they are trapped or unconscious.

The inventors realised that since large numbers of people now carry mobile phones, wireless networks can be used to aid disaster assistance efforts and femtocells may be useful in those efforts. The inventors realised that use of wireless networks for this purpose need to be targeted, and typically small specific areas within a normal macrocell coverage area are the focus of rescue efforts.

We now describe a disaster situation and emergency-recovery system including femtocell base stations, then look in greater detail at detection, location and identification of user terminals of victims of the disaster.

### System

In an area where a natural disaster, for example a tsunami, avalanche or mud-slide, has occurred, live human victims may survive having powered-on user terminals.

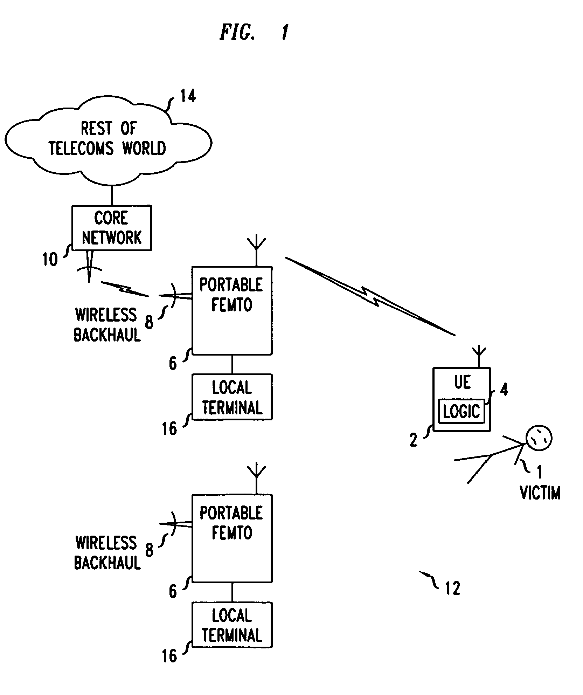

As shown in Figure 1, a victim 1 of the disaster has a user terminal 2 which include a processor 4 configured to aid in emergency recovery as will be explained in more detail below. Also, portable femtocell base stations 6 are brought to the scene for use in emergency recovery.

Each portable femto 6 has a low transmit power and hence a small radio coverage area (compared to say a macrocell base station). This makes a portable femto useful in targeting user terminals to within a small area.

Each portable femto 6 includes an easily-configured backhaul link 8 to a core network 10 of a telecommunications system 12. The core network 10 is connected to the rest of the telecommunications world 14. In this example, the backhaul link 8 is a microwave backhaul link. In another otherwise similar example, the backhaul link 8 involves the use of satellites. The backhaul link 8 is easily configured so as to provide wireless coverage in the immediate disaster area whilst being connected with the rest of the telecommunications system 12.

Each portable femto 6 is connected to an associated local terminal 16.

### Portable Femto

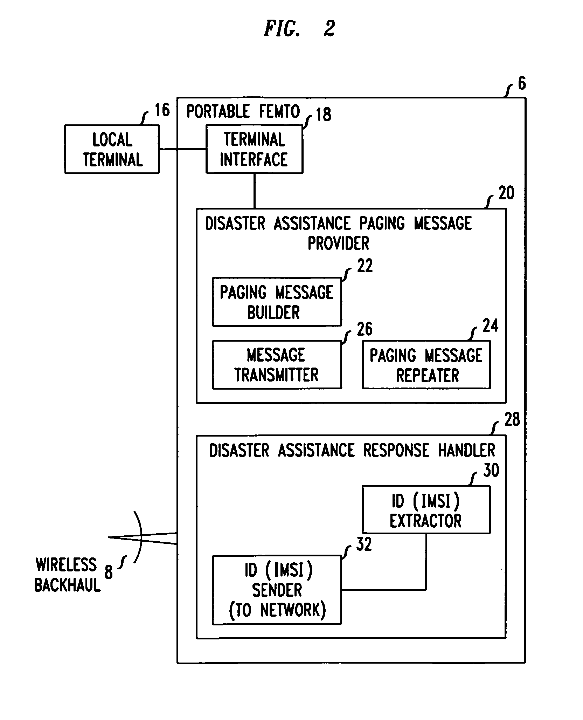

As shown in Figure 2, a portable femto 6 includes a terminal interface 18 connecting the local terminal 16 to a paging message provider 20 for disaster assistance. The paging message provider includes a paging message builder 22, a paging message repeater 24, and a paging message transmitter 26. The paging messages include a specific field (known as a cause value), identifying the paging message as being for disaster assistance.

The portable femto 6 also includes a response handler 28 for disaster assistance. The response handler 28 includes an identifier extractor 30 configured to extract identification information from signal received from user terminals, and an identification information sender 32 configured to send the identification information via the backhaul link 8 to the core network 10. In this example, the identification information is International Mobile Subscriber Identity, IMSI.

### User Terminal

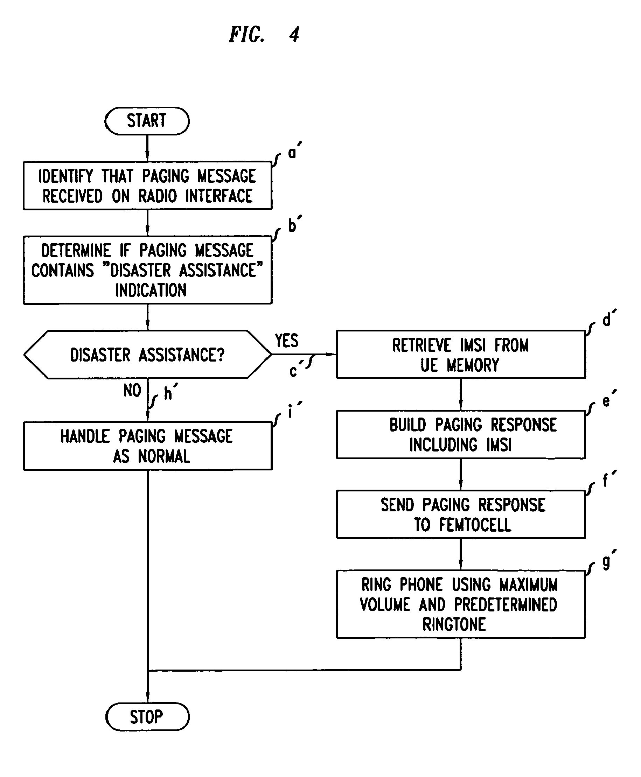

The user terminal 2 includes a processor 4. The processor 4 acts to receive the paging message and upon identifying the cause value therein as being for disaster assistance, to trigger the user terminal 2 to both immediately respond by radio giving its International Mobile Subscriber Identity(IMSI) and cause the user terminal to ring at maximum sound volume. This is explained in more detail below with reference to Figure 4.

The user terminals are adapted to provide their IMSI, rather than merely a temporary identifier. In a disaster situation, security is less of a concern than ease of identification of the user.

### Operation

The portable femto 6 is taken to the disaster area and connects with the core network 10 via a satellite backhaul link 8.

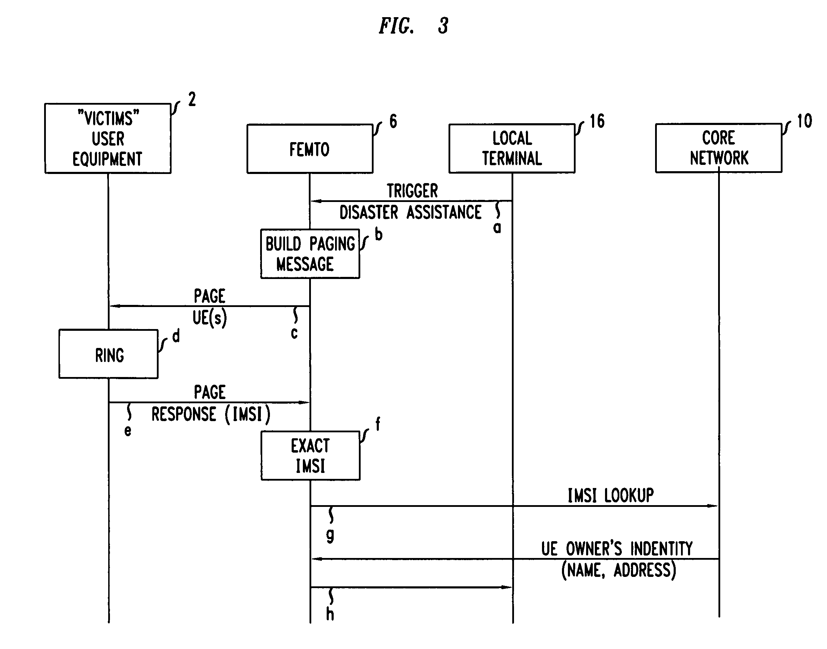

As shown in Figure 3, the portable femto 6 is commanded (step a) to initiate a disaster assistance procedure, by a human operator of the portable femto, via the local terminal 16 attached to the femto 6. This procedure involves the femto 6 building a paging message (step b), in its Paging message builder 22, and transmitting (step c) this message, by its transmitter 26, in a repeated fashion, controlled by its repeater 24.

Since the coverage area of a femto is small, typically in the order of tens of metres radius, any user terminal that responds will be within this area. In order to ensure that all user terminals react to the paging message, regardless of which network provider they subscribe to in that country, an indication is included in the paging message that it is for disaster assistance purpose. Specifically a message field known as a Paging Cause value is included in the paging messages.

Any user terminal that receives this paging message automatically identifies this paging cause value and hence automatically rings (step d) its phone on maximum volume according to a specific repeated pattern, which may be considered a disaster assistance ringing pattern. This provides rescuers with an audible aid to help them locate victims that may be buried and hence are difficult to locate.

Upon identifying the paging cause value, the user terminal also sends (step e) a response message, by radio including its global unique identifier, specifically its International Mobile Subscriber Identity, IMSI, to the femto 6.

The response message is received by the femto 6. The femto 6 uses the ID extractor 30 of its response handler 28 to retrieve (step f) the IMSI and forwards (step g) this to the core network 10 where the victim's identity in terms of name and address etc is looked up and sent (step h) via the femto 6 for display on the local terminal 16 to rescuers. Those details are known from phone contract details and billing records. In this regard, it may be considered that the portable femtos 6 automatically support Radio Access Network (RAN) sharing in that the femto 6 responds to receipt of the response message irrespective of which network service provider that the user terminal is subscribed to.

It will be seen that the above described approach to disaster assistance helps rescuers to detect, locate and identify victims who might be trapped by the disaster.

### Operation in the Victim's user equipment

As shown in Figure 4, the victim's user equipment 2 acts to identify (step a') that a paging message has been received and acts to determine(step b') whether the message includes the specific Paging cause value that is a disaster assistance indication. If yes (step c') the user terminal's IMSI is retrieved (step d') from memory (not shown) and included (step e') in a paging response that is sent (step f) to the portable femto. The user equipment then rings at maximum volume and uses a predetermined ringtone (g').

Alternatively, if the paging message is determined (step h') as not including a disaster assistance indication, it is treated in a conventional way (step *i*').

In the above-described example, a conventional telecommunications network (not shown) including one or more macrocell base stations covering the disaster area, may or may not have been disabled by the disaster. Particularly in the case where the conventional network has been disabled, a portable femto may provide cellular telecommunications coverage in addition to being used to detect, locate and identify user terminals of disaster victims.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of detection of a user terminal for cellular wireless telecommunications as being in a femtocell by:
sending a paging message from a portable femtocell base station, the paging message including an indicator that any user terminal for cellular wireless telecommunications receiving the paging message is to respond;
the user terminal responding by sending a response message including an identifier of the user terminal; and
the response message being detected by the portable femtocell base station.

2. A method according to claim 1, in which the user terminal also responds by emitting sound according to a given sound tone pattern so as to aid in locating the user equipment.

3. A method according to claim 2, in which the sound is sound at maximum volume.

4. A method according to any preceding claim, in which the identifier of the user terminal is used to determine personal data for use in identifying the user.

5. A method according to any preceding claim, in which the personal data includes at least one of name and address.

6. A method according to any preceding claim, in which the identifier is International Mobile Subscriber Identity, IMSI.

7. A portable femtocell base station comprising a paging message provider for disaster assistance and a response handler for disaster assistance, in which the paging message provider is configured to provide a paging message including an indicator that any user terminal for cellular wireless telecommunications receiving the paging message is to respond by providing an identifier of the user terminal.

8. A portable femtocell base station according to claim 7, in which the paging message provider comprises a paging message builder, a paging message repeater, and a transmitter of the repeated paging messages.

9. A portable femtocell base station according to claim 7 or claim 8, in which the response handler is configured to extract the identifier from a received response message and is configured to forward the identifier to a core network.

10. A portable femtocell base station according to claim 9, configured to receive personal data of the user from the core network and to send that personal data for display.

11. A portable femtocell base station according to any of claims 7 to 10, providing a femtocell radius in the range of tens of metres.

12. A portable femtocell base station according to any of claims 7 to 11, providing a femtocell radius in the range of 50 to 100 metres.

13. A user terminal for cellular wireless telecommunications configured to receive a paging message from a portable femtocell base station; to determine whether a specific indicator is included in the paging message indicative that any user terminal receiving the paging message is to respond, and if so, to respond by sending a response message including an identifier of the user terminal.

14. A user terminal according to claim 13, in which the user terminal also responds by emitting sound at maximum volume according to a given sound tone pattern so as to aid in locating the user equipment.

15. A user terminal according to claim 13 or claim 14, in which the identifier is International Mobile Subscriber Identity, IMSI.
